# EUROPEAN PATENT APPLICATION

(11) **EP 4 339 155 A1**
(43) Date of publication of application: **20.03.2024**
(21) Application number: 22807500.8
(22) Date of filing: 11.05.2022
(51) Int. Cl.: C01B 11/02, A01P 1/00, A01P 3/00, C02F 1/50, A01N 59/08

(54) **CHLORINE PEROXIDE RADICAL, AND PRODUCTION METHOD, COMPOSITION, QUANTIFICATION METHOD AND USE THEREOF**

(30) Priority: 12.05.2021 JP 2021081185
(71) Applicant: Sankei Co., Ltd., Chuo-ku Osaka-shi Osaka 540-0001 (JP)
(72) Inventor: GODA, Hisataka, Osaka-shi, Osaka 541-0048 (JP)
(74) Representative: Müller-Boré & Partner Patentanwälte PartG mbB
(86) International application number: PCT/JP2022/019945
(87) International publication number: WO 2022/239801

(57) **Abstract**

The present disclosure provides a medicinal agent that is useful for disinfection of microorganisms and the like. The present disclosure provides a chlorine peroxide radical. The chlorine peroxide radical is preferably provided as a liquid. Also provided are: a method for producing the chlorine peroxide radical; a method for killing microorganisms using the chlorine peroxide radical; a microorganism-killing agent; a method for measuring bactericidal activity; a device for measuring the chlorine peroxide radical; and a kit for preparing the chlorine peroxide radical. This method for producing the chlorine peroxide radical includes a step for bringing a chlorine oxide into contact with an excess of hydrogen ions.

## Description

### [Technical Field]

The present disclosure relates to a chlorine peroxide radical, and a manufacturing method, a composition, a quantification method, and use thereof.

### [Background Art]

There are various types of chlorine oxides, and many are utilized as a sterilizing agent. However, details thereof are often not elucidated.

### [Summary of Invention]

### [Solution to Problem]

As a result of diligent studies, the inventors found a chlorine peroxide radical and a method of manufacturing the same, and found that a chlorine peroxide radical is involved in sterilization of microorganisms.

The present disclosure has found a method of manufacturing a chlorine peroxide radical, comprising a step of contacting a solution comprising a chlorine oxide comprising two or more oxygen atoms to one chlorine atom with an excessive amount of hydrogen ions relative to the chlorine oxide. It was also found that such a chlorine peroxide radical is stably present. This is described briefly as follows.

Active molecular species of a solution prepared from contacting an excessive amount of hydrogen ions with a chlorine oxide were studied using an electron spin resonance spectrometer (ESR) and spectrophotometer (UV) . ESR spectra showed the presence of chlorine peroxide radicals (Cl-O-O·). The concentration of such a chlorine peroxide radical was dependent on the amount of substance of hydrogen ions. Further, the concentration of a chlorine peroxide radical that is an active molecular species involved in sterilization was found to be clearly correlated with a value (free chlorine concentration) obtained by using DPD method, which is a common method for measuring the residual chlorine concentration in a pool, etc. as one type of colorimetric methods, absorbance (A₃₅₀), and chlorite ion (ClO₂-) concentration prior to transition to acidic conditions. In view of the above, active molecular species of a solution prepared from contacting an excessive amount of hydrogen ions with a chlorine oxide are chlorine peroxide radicals. It was found that the concentration of such chlorine peroxide radicals can be quantified by using a value (free chlorine concentration) obtained by colorimetry (DPD method, including TMB and KI methods as colorimetry) . It was also revealed that management of these values with the content (total amount of chlorine) associated with safety obtained by using potassium iodide redox titration can ensure safely benefiting from a sterilizing effect against bacteria or an inactivating effect against viruses.

The present disclosure has elucidated active molecular species from both ion chemistry and radical chemistry approaches by observing a solution prepared by mixing an excessive amount of a GRAS acid (e.g., hydrochloric acid) with chlorite (NaClO₂) by using a spectrophotometer and an electron spin resonance spectrometer. The causal relationship between a method capable of qualitatively and quantitatively evaluating such active molecular species and an antimicrobial effect or sterilizing/disinfecting effect thereof has also been revealed.

For example, the present disclosure provides the following items.

### (Item 1)

A chlorine peroxide radical.

### (Item 2)

A method of manufacturing a chlorine peroxide radical, comprising a step of contacting an excessive amount of hydrogen ions with a chlorine oxide having a portion comprising two or more oxygen atoms to one chlorine atom.

### (Item 3)

The method of item 2, wherein the excessive amount is an amount of hydrogen ions greater than 0.07 milliequivalent per 1 g of mass in terms of sodium chlorite of the chlorine oxide.

### (Item 4)

The method of item 2 or 3, wherein the excessive amount is an amount of hydrogen ions of 0.15 milliequivalent or greater per 1 g of mass in terms of sodium chlorite of the chlorine oxide.

### (Item 5)

The method of any one of items 2 to 4, wherein the chlorine oxide is chlorine dioxide, chlorine dioxide gas, aqueous chlorine dioxide, stabilized chlorine dioxide (hydrogenic chlorine dioxide), chlorous acid, chlorite, chlorite ion, chloric acid, chlorate, chlorate ion, perchloric acid, perchlorate, and/or perchlorate ion.

### (Item 6)

The method of any one of items 2 to 5, wherein the chlorine oxide is an aqueous solution.

### (Item 7)

The method of any one of items 2 to 6, wherein the step of contacting hydrogen ions comprises adding an acid.

### (Item 8)

The method of item 7, wherein the acid is a GRAS acid.

### (Item 9)

The method of any one of items 2 to 8, wherein the step of contacting hydrogen ions comprises using H+ ion exchange resin.

### (Item 10)

The method of any one of items 2 to 9, wherein the chlorine peroxide radical is present in an aqueous solution.

### (Item 11)

A composition comprising a chlorine peroxide radical.

### (Item 12)

The composition of item 11, wherein the composition is an aqueous solution.

### (Item 13)

The composition of item 11 or 12, wherein the chlorine peroxide radical is present as an active ingredient of a sterilizing agent.

### (Item 14)

A method of killing a virus, a bacterium, and/or a fungus, comprising a step of contacting a chlorine peroxide radical with a virus, a bacterium, and/or a fungus.

### (Item 15)

Use of a chlorine peroxide radical in the manufacture of a sterilizing agent for killing a virus, a bacterium, and/or a fungus.

### (Item 16)

A method of confirming and/or quantifying the presence of a chlorine peroxide radical in a liquid, comprising a step of detecting a chlorine peroxide radical and/or measuring an amount of a chlorine peroxide radical by ESR.

### (Item 17)

A method of measuring a sterilizing power of an agent for killing a virus, a bacterium, and/or a fungus, comprising a step of measuring a concentration of a chlorine peroxide radical in the agent.

### (Item 18)

Use of a chlorine peroxide radical for killing a virus, a bacterium, and/or a fungus.

The present disclosure is intended so that one or more of the features described above can be provided not only as the explicitly disclosed combinations, but also as other combinations. Additional embodiments and advantages of the present disclosure are recognized by those skilled in the art by reading and understanding the following detailed description as needed.

### [Advantageous Effects of Invention]

A novel substance, i.e., chlorine peroxide radical, is obtained. A method for sterilizing microorganisms with a chlorine peroxide radical is obtained. A method of measuring a chlorine peroxide radical is obtained, so that a required and sufficient sterilization can be suitably administered.

### [Brief Description of Drawings]

[Figure 1A] Figure **1A** shows ESR spectra of radical species in an aqueous solution obtained by adding an acid to sodium chlorite, which are ESR spectra of radical species seen in an aqueous solution after mixing an aqueous HCl solution to achieve a final HCl concentration of 1.25 M in 240 seconds. The figure shows the concentration of sodium chlorite.
[Figure 1B] Figure **1B** shows ESR spectra of radical species in an aqueous solution obtained by adding an acid to sodium chlorite, which shows dependency of the ESR spectra of the aqueous solution on the HCl concentration. The final HCl concentrations are shown in the figure. The ESR spectra were recorded 240 seconds after mixing an aqueous 0.1 M sodium chlorite solution with an aqueous HCl solution.
[Figure 2A] Figure **2A** shows the time dependent change of ESR spectra after mixing a 0.1 M sodium chlorite solution with 0.08 M hydrochloric acid at a ratio of 1:1.
[Figure 2B] Figure **2B** shows the UV-Vis absorption spectra and ESR signal intensity of an aqueous solution obtained by adding an acid to sodium chlorite. The figure shows the absorption spectra of an aqueous ASC solution under the same conditions as Figure **2A****.**
[Figure 2C] Figure **2C** shows the relationship between ESR signal intensity of chlorine peroxide radicals obtained from Figures **2A** and **2B** and absorbance at 354 nm.
[Figure 3A] Figure **3A** shows the relationship between consumption of active chlorine and the active chlorine concentration in a solution obtained by adding an acid to sodium chlorite at 354 nm. Figure **3A** shows the relationship between the free chlorine concentration and absorbance at 354 nm obtained by a DPD method under the same reaction condition as Figure **2A****.**
[Figure 3B] Figure **3B** shows a phenomenon where absorbance at a wavelength of 354 nm exhibited by an aqueous solution obtained by adding an acid to sodium chlorite upon addition of thiosulfate gradually decreases. Data represents mean ± SD (n = 3) .
[Figure 4] Figure **4** shows an optimized structure, charge distribution, and SOMO for a chlorine peroxide radical. Cl atoms and oxygen atoms are each shown as a sphere. Values indicate the Mulliken charge distribution of each atom, and the meshed surfaces indicate the spin density of SOMO.
[Figure 5] Figure **5** shows ESR spin-trapping measurements of an aqueous solution obtained by adding an acid to sodium chlorite by using 1.5M DMPO in HCl of various concentrations.
[Figure 6] Figure **6** shows the change in absorbance after adding an HCl solution to an NaClO₂ solution.

### [Description of Embodiments]

The present disclosure is described in more detail hereinafter. Throughout the entire specification, a singular expression should be understood as encompassing the concept thereof in the plural form, unless specifically noted otherwise. Thus, singular articles (e.g., "a", "an", "the", and the like in case of English) should also be understood as encompassing the concept thereof in the plural form, unless specifically noted otherwise. The terms used herein should be understood as being used in the meaning that is commonly used in the art, unless specifically noted otherwise. Therefore, unless defined otherwise, all terminologies and scientific technical terms that are used herein have the same meaning as the general understanding of those skilled in the art to which the present disclosure pertains. In case of a contradiction, the present specification (including the definitions) takes precedence.

The abbreviations used herein have the conventional meaning within the scope of the art, unless specifically noted otherwise.

The term "about" for a value or parameter herein includes variations about the value or parameter itself. Unless specifically noted otherwise, "about X" for example includes "X" itself, as well as values with an acceptable error of ± 10% therefrom.

As used herein, "chlorine peroxide radical" refers to a radical of a peroxide having two oxygen atoms to one chlorine atom, wherein the radical is not on a chlorine atom, but is on an oxygen atom. Thus, this is different from a chlorine dioxide radical (O=Cl·=O) having a radical on a chlorine atom. A chlorine peroxide radical being different from a chlorine dioxide radical can be confirmed by ESR measurement. A chlorine peroxide radical comprises a peroxide radical and is understood to have a structure of Cl-O-O-, which is not a chlorine dioxide radical (O=Cl·=O). A chlorine peroxide radical has absorbance of maximum absorbance wavelength at 350 to 360 nm. A chlorine peroxide radical has low reactivity as a radical and can be stable for a long period of time.

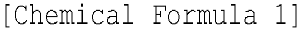

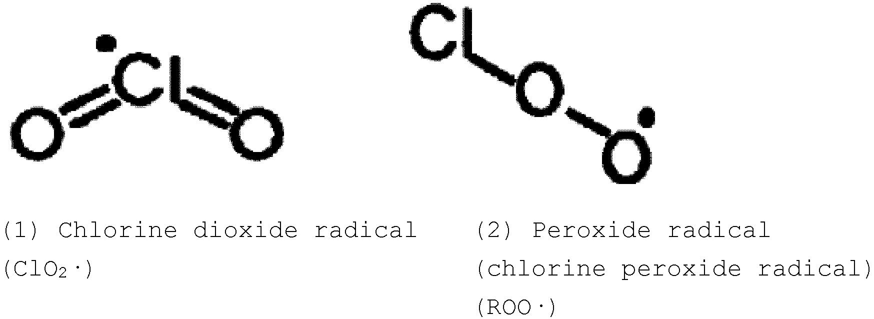

As used herein, "chlorine oxide" refers to any oxide of chlorine. Examples thereof include hypochlorous acid, chlorous acid, chloric acid, perchloric acid, salts thereof, esters of these acids (alkyl ester, etc.), dichlorine heptoxide, dichlorine hexoxide, dichlorine trioxide, chlorine dioxide, dichlorine monoxide, etc. sodium hypochlorite, calcium hypochlorite (bleaching powder), sodium chlorite, sodium chlorate, sodium perchlorate, etc. A chlorine oxide comprising two or more oxygen atoms to one chlorine atom is preferred herein.

As used herein, "chlorine oxide comprising two or more oxygen atoms to one chlorine atom" refers to a chlorine oxide, which comprises two or more oxygen atoms to one chlorine atom. Examples thereof include chlorous acid (HClO₂), chloric acid (HClO₃), perchloric acid (HClO₄), etc. Dichlorine heptoxide has a structure of OCl(O)₂-O-Cl(O)₂O and comprises two or more oxygen atoms to one chlorine atom, thus falling under a "chlorine oxide comprising two or more oxygen atoms to one chlorine atom". It is understood that dichlorine trioxide has a structure of OCl-ClO₂ or Cl-O-ClO₂ and comprises a "ClO₂" moiety, thus falling under a "chlorine oxide comprising two or more oxygen atoms to one chlorine atom".

"Mass in terms of sodium chlorite" refers to mass calculated by assuming the amount of chlorite ions present in a chlorine oxide as sodium chlorite (NaClO₂ = 90.45). The amount of chlorite ions can be measured by potassium iodide redox titration.

"Equivalent" of hydrogen ions is an amount considering the number of hydrogen atoms that can be substituted for hydrogen ions contained in a molecule. When hydrochloric acid is used as a proton donating acid, a hydrogen ion per 1 mol of hydrochloric acid is 1 equivalent (eq) . For sulfuric acid, a hydrogen ion per mol is 2 equivalents (eq) . For example, 50 g of H+ ion exchange resin with an ability to release 1.92 meq/ml of proton is 96 meq (for convenience, H+ ion exchange resin is calculated as 1 ml = 1 g; this is to be considered when the specific gravity is explicitly described for the ion exchange resin that is used).

An "excessive amount" of hydrogen ions refers to an amount of hydrogen ions greater than the minimum value at which a chlorine peroxide radical is generated in the manufacture of a chlorine peroxide radical. This can be determined by finding the minimum value at which a chlorine peroxide radical is generated. The amount can be measured by a method of measuring the absorbance at 350 nm, a method of measuring ESR, etc. An excessive amount can be represented by hydrogen ion equivalent (e.g., 0.07 meq/g or 0.15 meq/g) per 1g of mass in terms of sodium chlorite.

As used herein, "H+ ion exchange resin" refers to one type of synthetic resin which has a structure that ionizes as an ion exchange group in a part of the molecular structure. Those that release a hydrogen ion are preferred. Examples thereof include Amberlight IR120B.

As used herein, "GRAS acid" refers to acids that are generally recognized as safe substances. GRAS acids can be used as, but not limited to, food ingredients. It is understood that any GRAS acid used as a food ingredient is readily sold as a food product, etc. after disinfection, etc. using a formulation manufactured by the manufacturing method herein. Classification of GRAS acids used herein is shown below.

### [Chemical Formula 2]

### 1. 21CFR 182 GRAS acids with no classification

| |
|---|
| 182.1045 Glutamic acid. |
| 182.1057 Hydrochloric acid. |
| 182. 1073 Phosphoric acid. |
| 182.3013 Ascorbic acid. |
| 182.3041 Erythorbic acid. |
| 182.3109 Thiodipropionic acid. |

### [Chemical Formula 3]

### 2. 21CFR 184 GRAS acids that can be directly used as a food ingredient

| |
|---|
| 184.1005 Acetic acid. |
| 184.1007 Aconitic acid. |
| 184.1009 Adipic acid. |
| 184.1011 Alginic acid. |
| 184.1021 Benzoic acid. |
| 184.1025 Caprylic acid. |
| 184.1033 Citric acid. |
| 184.1061 Lactic acid. |
| 184.1065 Linoleic acid. |
| 184.1069 Malic acid. |
| 184.1090 Stearic acid. |
| 184.1091 Succinic acid. |
| 184.1095 Sulfuric acid. |
| 184.1097 Tannic acid. |
| 184.1099 Tartaric acid. |

### [Chemical Formula 4]

21CFR 186 GRAS acids that can only be used indirectly

| |
|---|
| 186.1093 Sulfamic acid. |
| 186.1316 Formic acid. |

In one embodiment, a GRAS acid is selected from the group consisting of glutamic acid, hydrochloric acid, phosphoric acid, ascorbic acid, erythorbic acid, thiodipropionic acid, acetic acid, aconitic acid, adipic acid, alginic acid, benzoic acid, caprylic acid, citric acid, lactic acid, linolenic acid, malic acid, stearic acid, succinic acid, sulfuric acid, tannic acid, tartaric acid, sulfamic acid, and formic acid. In a preferred embodiment, a GRAS acid is selected from the group consisting of glutamic acid, hydrochloric acid, phosphoric acid, ascorbic acid, erythorbic acid, thiodipropionic acid, acetic acid, aconitic acid, adipic acid, alginic acid, benzoic acid, caprylic acid, citric acid, lactic acid, linolenic acid, malic acid, stearic acid, succinic acid, sulfuric acid, tannic acid, and tartaric acid. These preferred GRAS acids are recognized by the US Food and Drug Administration (FDA) as those that can be directly used and are advantageous in this regard. More preferably, a GRAS acid is selected from the group consisting of sulfuric acid, phosphoric acid, citric acid, lactic acid, acetic acid, and hydrochloric acid because the Examples have confirmed that double peaks are maintained when these GRAS acids are used, i.e., there are special absorbent sections at wavelengths of 354 nm and 260 nm, and it is understood that a stable sterilizing power is maintained over a long period of time.

As used herein, "free chlorine", "free chlorine concentration", or "free residual chlorine concentration" is a value measured via the Appended Table 3 in "Method of testing free residue chlorine and bound chlorine determined by the Minister of Health, Labour and Welfare based on the provision of Sec. 17(2) of the Regulation of Waterworks Act" (hereinafter, colorimetry (DPD indicator)) and is a value obtained by oxidation of a DPD indicator.

As used herein, "microorganisms" refer to small organisms that cannot be seen by the naked eye such as viruses, bacteria, and fungi. Rickettsia, spirochaete, etc., are bacteria. As used herein, "microorganisms" do not include parasites (protozoa, flukes, tapeworms, nematodes, etc.). As used herein, "pathogenic microorganisms" refer to microorganisms that infect through humans or the environment. An infected individual can spread microorganisms through diarrhea, vomit, coughing, etc., to cause secondary infections.

"Aqueous chlorine dioxide" refers to an aqueous solution of chlorine dioxide.

"Hydrogenic chlorine dioxide", "stabilized chlorine dioxide", and "stabilized chlorine dioxide water" are each used in the same meaning, referring to a chlorine oxide with chlorine dioxide gas stabilized in an aqueous solution. Examples thereof include those commercialized by Bio-Cide International, Inc.

### (Preferred embodiments)

The preferred embodiments of the present disclosure are described hereinafter. It is understood that the embodiments provided hereinafter are provided to better facilitate the understanding of the present disclosure, and thus the scope of the present disclosure should not be limited by the following descriptions. Therefore, it is apparent that those skilled in the art can refer to the descriptions herein to make appropriate modifications within the scope of the present disclosure. It is also understood that the following embodiments of the present disclosure can be used alone or in combination.

The present disclosure describes various aspects of a chlorine peroxide radical, manufacturing method, measuring method, and other applications thereof hereinafter.

### (Chlorine peroxide radical)

In one aspect of the present disclosure, a chlorine peroxide radical is provided. The chlorine peroxide radical discovered in the present disclosure is a peroxide radical having the structure of "Cl-O-O·". While it has been known that chlorine dioxide is generated from chlorite such as sodium chlorite, it was not known to have the structure of "Cl-O-O." instead of the structure of a chlorine dioxide radical "O=Cl·=O" and a radical thereof is stably present. A chlorine peroxide radical is preferably present in water. A chlorine peroxide radical can be stably present and preferably can be present for a longer period of time when stored in a container that does not eliminate radicals such as a glass bottle at a cool and dark location. In a nonlimiting preferred embodiment, long term stability can be achieved when prepared at a yield of 10% or less in molar ratio. However, despite such stability, the radical maintains properties as a radical, can be taken into microorganisms that would take up radicals such as bacteria, and can kill the microorganisms. A chlorine peroxide radical has absorbance at the maximum absorbance wavelength of 350 to 360 nm. The change in the amount thereof over time can be readily confirmed by UV measurement.

### (Method of manufacturing a chlorine peroxide radical)

The chlorine peroxide radical of the present disclosure can be manufactured by a step of contacting an excessive amount of hydrogen ions with a solution comprising a chlorine oxide having a portion comprising two or more oxygen atoms to one chlorine atom. The excessive amount can be determined by an increase in a maximum absorbance section at 354 nm in a UV spectrum. The concentration at which an increase in absorbance at wavelength of 354 nm is first observed can be determined as the minimum value at which a chlorine peroxide radical is generated. It is important that the amount of hydrogen ions is an excessive amount with respect to a chorine oxide. It was found that a chlorine peroxide radical, which is a peroxide radical, is generated from a chlorine oxide by adding an excessive amount of hydrogen ions. Since the amount of hydrogen ions is excessive, pH can be less than 3, such as less than 2.5, less than 2.3, 2.0 or less, 1.5 or less, 10 or less, etc. The reaction may take place at room temperature in the atmosphere. If a chlorine oxide comprising two or more (e.g., 2.5, 3, 3.5, 4, etc.) oxygen atoms to one chlorine atom such as chloric acid or perchloric acid is the raw material, a chlorine peroxide radical can be generated by setting the amount of hydrogen ions to be at an excessive amount with respect to the chlorine oxide. Although not wishing to be bound by any theory, the presence of generated chlorine peroxide radical can be confirmed by ESR.

The excessive amount can be an amount of hydrogen ions greater than 0.07 milliequivalent per 1 g of mass in terms of sodium chlorite of the chlorine oxide. The excessive amount can be an amount of hydrogen ions that is 0.08 milliequivalent, 0.09 milliequivalent, 0.10 milliequivalent, 0.11 milliequivalent, 0.12 milliequivalent, 0.13 milliequivalent, 0.14 milliequivalent, 0.15 milliequivalent, 0.2 milliequivalent, 0.25 milliequivalent, 0.3 milliequivalent, 0.35 milliequivalent, 0.4 milliequivalent, 0.45 milliequivalent, 0.5 milliequivalent, 0.55 milliequivalent, 0.6 milliequivalent, 0.7 milliequivalent, 0.8 milliequivalent, 0.85 milliequivalent, 0.9 milliequivalent, 1 milliequivalent, 1.5 milliequivalent, 2 milliequivalent, 2.5 milliequivalent, 2.75 milliequivalent, 3 milliequivalent, 3.5 milliequivalent, 4 milliequivalent, 4.5 milliequivalent, 4.75 milliequivalent, 5 milliequivalent, 5.5 milliequivalent, 6 milliequivalent, 6.5 milliequivalent, 7 milliequivalent, 8 milliequivalent, 8.5 milliequivalent, 9 milliequivalent, 10 milliequivalent, 11 milliequivalent, 12 milliequivalent, 13 milliequivalent, 14 milliequivalent, 15 milliequivalent, 16 milliequivalent, 18 milliequivalent, 20 milliequivalent, 25 milliequivalent, 30 milliequivalent, 35 milliequivalent, 40 milliequivalent, 50 milliequivalent, 60 milliequivalent, 70 milliequivalent, 80 milliequivalent, 85 milliequivalent, 90 milliequivalent, 95 milliequivalent, 100 milliequivalent, or greater, or any value between these values, per 1 g of mass in terms of sodium chlorite of the chlorine oxide.

Although not wishing to be bound by any theory, it is conceivable for a chlorine oxide comprising two or more oxygen atoms to one chlorine atom that an oxygen atom binds to a hydrogen ion and leaves the chlorine oxide as "OH". It is understood, for chloric acid (HClO₃), that one oxygen leaves by binding with a hydrogen ion to generate a chlorine peroxide radical (Cl-O-O·) comprising two oxygens to one chlorine.

In one aspect of the present disclosure, a method of manufacturing a chlorine peroxide radical is provided. In one embodiment of the present disclosure, a method of manufacturing a chlorine peroxide radical, comprising a step of contacting an excessive amount of hydrogen ions with a chlorine oxide comprising two or more oxygen atoms to one chlorine atom is provided.

In one embodiment of the present disclosure, the chlorine oxide is chlorine dioxide, chlorine dioxide gas, aqueous chlorine dioxide, stabilized chlorine dioxide (hydrogenic chlorine dioxide), chlorous acid, chlorite, chlorite ion, chloric acid, chlorate, chlorate ion, perchloric acid, perchlorate, and/or perchlorate ion.

In one embodiment of the present disclosure, the chlorine oxide is an aqueous solution. An aqueous solution can be a desired form because such a form can be readily handled, and a chlorine peroxide radical is relatively easily generated.

In one embodiment of the present disclosure, the step of contacting hydrogen ions comprises adding an acid. In one embodiment of the present disclosure, the acid is a GRAS acid. GRAS acids are generally recognized as safe substances and can be instrumental in the safe manufacture and use of a chlorine peroxide radical.

In one embodiment of the present disclosure, the step of contacting hydrogen ions comprises using H+ ion exchange resin. Any H+ ion exchange resin may be used, as long as a hydrogen ion is provided. H+ ion exchange resin may be directly added as powder to the chlorine oxygen. The chlorine oxide may be passed through a column comprising ion exchange resin.

In one embodiment of the present disclosure, the chlorine peroxide radical is present in an aqueous solution. A chlorine peroxide radical can be stable in an aqueous solution.

In one aspect of the present disclosure, a composition comprising a chlorine peroxide radical is provided, and preferably, the present disclosure provides an aqueous solution comprising a chlorine peroxide radical. A chlorine peroxide radical can be stably present for a long period of time such as 24 hours, 7 days, or 1 month or longer in the chlorine peroxide radical-containing aqueous solution of the present disclosure.

In one embodiment of the present disclosure, the chlorine peroxide radical is present as an active ingredient of a sterilizing agent. As described above, a chlorine peroxide radical can be stably present for a long period of time such as 24 hours, 7 days, or 1 month or longer in an aqueous solution. Thus, the composition of the present disclosure can be provided as a sterilizing agent that is effective for a long period of time in the present disclosure.

In one aspect of the present disclosure, a method of killing microorganisms, comprising a step of contacting a chlorine peroxide radical with microorganisms is provided. Examples of microorganisms include viruses, bacteria, and/or fungi. The method of the present disclosure can exclude use for treating humans. In another aspect of the present disclosure, a method of preventing or treating a disease or disorder due to microorganisms comprising a step of contacting an effective amount of chlorine peroxide radical with the microorganisms is provided.

In one aspect of the present disclosure, use of a chlorine peroxide radical in the manufacture of a sterilizing agent for killing microorganisms is provided. Examples of microorganisms include viruses, bacteria, and/or fungi.

In one aspect of the present disclosure, a method of confirming and/or quantifying the presence of a chlorine peroxide radical in a liquid, comprising a step of detecting a chlorine peroxide radical and/or measuring an amount of a chlorine peroxide radical by ESR is provided.

In one aspect of the present disclosure, use of a chlorine peroxide radical for killing a virus, a bacterium, and/or a fungus is provided.

A free radical in a liquid can be measured by ESR. A chlorine peroxide radical can be identified by four lines of the intensity ratio 1:1:1:1 with g = 2.0114 and α = 1.85 mT as ESR parameter values.

The ESR signal intensity of a chlorine peroxide radical exhibits a linear relationship with absorbance at 354 nm of UV-Vis absorption spectra and can be quantified by measuring the UV absorption spectra. Absorbance at 354 nm exhibits a linear relationship with the free chlorine concentration according to the DPD method. A chlorine peroxide radical can also be quantified by measuring the free chlorine concentration through the DPD method.

In one aspect of the present disclosure, a method of measuring a sterilizing power of an agent for killing microorganisms is provided. The method comprises a step of measuring a concentration of a chlorine peroxide radical (Cl-O-O·) in the agent. Examples of microorganisms include viruses, bacteria, and/or fungi. The concentration of a chlorine peroxide radical (Cl-O-O·) can be measured by electron spin resonance. Measurement of the concentration of a chlorine peroxide radical (Cl-O-O·) can include measuring the absorbance at the maximum absorbance wavelength of 350 to 360 nm by ultraviolet visible spectrometry. The concentration of a chlorine peroxide radical (Cl-O-O·) can be measured by measuring the free chlorine concentration and calculating the concentration of the chlorine peroxide radical (Cl-O-O·). The concentration of a chlorine peroxide radical (Cl-O-O·) can be measured by colorimetry or potassium iodide titration. The concentration of a chlorine peroxide radical (Cl-O-O·) can be measured by the DPD or TMB method.

In one aspect of the present disclosure, a kit for preparing a chlorine peroxide radical (Cl-O-O·), comprising a chlorite, an acid, and an instruction for contacting the chlorite with the acid can be provided.

### (Comparison/evaluation of antimicrobial effect of a chlorine peroxide radical)

Comparison/evaluation of antimicrobial effects of chlorine peroxide radicals is problematic in that the concentration of chlorine oxide can be denoted in terms of available chlorine concentration or free chlorine, while antimicrobial effects are dependent on free chlorine, which is the source of oxidation power. In addition, sodium hypochlorite has a near 1:1 relationship between free chlorine and available chlorine concentrations, but it is known that the available chlorine concentration and free chlorine do not necessarily match for chlorous acid in the same manner as sodium hypochlorite. In this regard, oxidation power representing an antimicrobial effect, i.e., free chlorine, is used instead of the available chlorine concentration for comparison in the evaluation of sterilizing power of a chlorine peroxide radical.

Oxidation power of a chlorine oxide agent is generally found through a measurement method utilizing colorimetry such as a TMB method or DPD method. However, there is no standard for measuring free chlorine in a chlorine peroxide radical in the same manner as sodium hypochlorite. For this reason, calibration curves are created by using 1 mg/L of free chlorine (as Cl) of sodium hypochlorite as 1 oxidation power. Oxidation power can be represented by free chlorine (as Cl) . For comparison at the same free chlorine level, free chlorine (as Cl) of sodium hypochlorite is generated from Cl radicals, but comparison would be difficult when evaluating with respect to a standard in accordance with free chlorine of chlorine peroxide radical. Thus, it is compared and evaluated with sodium hypochlorite on a level field by using the same standard through calculation at oxidation power 1 = 1 mg/L of free chlorine (as Cl) in the same manner as sodium hypochlorite.

As a measuring method of free chlorine (as Cl), a buffer and a DPD indicator are added to a sample, and a wavelength of 510 nm is measured with an absorption spectrophotometer, and for measurement of free chlorine (as Cl) in the presence of an organic matter, measurement is taken at a wavelength of 655 nm using a TMB reagent to deduce the concentration from the measurement values. Further, a method of conducting a test for studying a sterilization effect includes preparing free chlorine (as Cl) of a test agent by the DPD method, contacting each agent with an organic matter-containing bacterial solution, neutralizing the solution with sodium thiosulfate after a certain period of time has passed, and checking the viable bacteria count in the neutral solution.

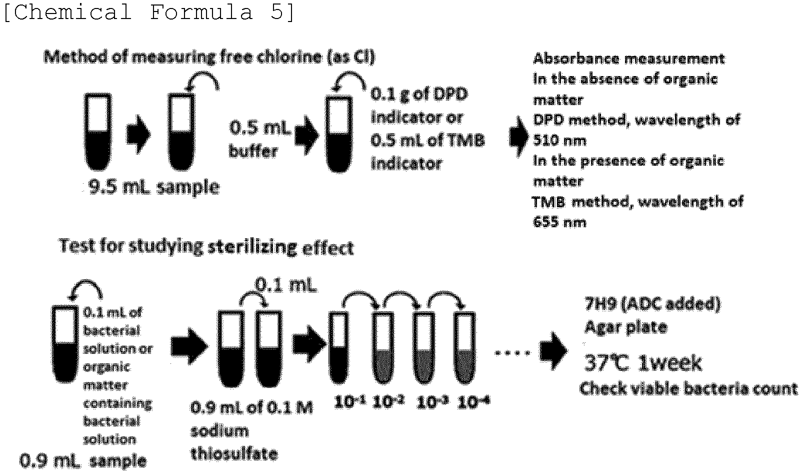

Reference documents such as scientific literature, patents, and patent applications cited herein are incorporated herein by reference to the same extent that the entirety of each document is specifically described.

As described above, the present disclosure has been described while showing preferred embodiments to facilitate understanding. While the present disclosure is described hereinafter based on Examples, the above descriptions and the following Examples are not provided to limit the present invention, but for the sole purpose of exemplification. Thus, the scope of the present invention is not limited to the embodiments and Examples specifically described herein and is limited only by the scope of claims.

### [Examples]

### (Example 1: Identification of a chlorine peroxide radical in an aqueous solution obtained by adding an acid to sodium chlorite)

This study investigated the feasibility of identifying active radical species in an aqueous solution obtained by adding an acid to sodium chlorite and quantifying the chemical species by the diethyl phenylenediamine (DPD) method. Active species generated in a solution comprising sodium chlorite (NaClO₂) were identified by using electron spin resonance (ESR) spectroscopy. ESR signals were directly observed at room temperature in an aqueous solution obtained by adding an acid to sodium chlorite. The ESR signals were very long lasting, indicating that radicals are thermodynamically stable. ESR parameters of the signals did not match the previously reported values of chlorine radicals (Cl·) or chlorine dioxide radicals (O=Cl·-O and O=Cl-O·). The signals are deemed to be from chlorine peroxide radicals (Cl-O-O·). Quantum chemical calculations revealed that the optimal structure of a chlorine peroxide radical is far more thermodynamically stable than the structure of a chlorine dioxide radical. The UV-visible spectra of chlorine peroxide radicals exhibited maximum absorbance at 354 nm. The absorbance had a linear relationship with ESR signal intensity of chlorine peroxide radicals. Quantification of the free chlorine concentration by the DPD method also revealed a linear relationship with maximum absorbance at 354 nm, thus demonstrating a linear relationship with the ESR signal intensity of chlorine peroxide radicals. These linear relationships suggest that the DPD method can quantify a chlorine peroxide radical, which is understood to be active species.

Chlorine dioxide based elemental chlorine free (ECF) technique was a dominant process for a long period of time in the pulp and paper industry for the manufacture of bleached chemical pulp. Chlorine dioxide is generally generated when sodium chlorate or sodium chlorite is reduced using hydrochloric acid, sulfuric acid, and hydrogen peroxide under strongly acidic conditions. It is demonstrated that chlorous acid (HClO₂) is a reaction intermediate and becomes unbalanced upon generation of chlorine dioxide under various conditions in this process.

It is well known that ClO₂ is formed by the following reaction in an acidic solution of NaClO₂.

NaClO₂+H+ → HClO₂+Na⁺ (1)

4HClO₂ → 2ClO₂+ClO₃⁻+Cl-+2H++H₂O (2)

Formula (2) is stoichiometry of disproportionation of chlorous acid reported by several researchers. This reaction under acidic conditions forms chlorate ions, chlorine dioxide, and chloride ions. It has been reported that disproportionation of chlorous acid has progressed through phased reactions under strongly acidic conditions (Ni Y, Yin G. Disproportionation of chlorous acid at a strong acidity. Ind Eng Chem Res.275 1998; 37: 2367-2372).

2HClO₂ → HOCl+HClO₃ (3)

ClO₂-+HClO₂ → HOCl+ClO₃⁻ (4)

HOCl+ClO₂⁻ → OH⁻+Cl-ClO₂ (5)

Cl-ClO₂+HClO₂ → H++Cl⁻+2ClO₂ (6)

In this process, a reaction is initiated by hypochlorous acid that is simultaneously generated from disproportionation of one or two chlorous acid molecules and one chlorite ion. Hypochlorous acid subsequently reacts with a chlorite ion to form an intermediate of dichlorine dioxide Cl-ClO₂. Dichlorine dioxide then reacts with chlorous acid to generate two molecules of chlorine dioxide.

An ASC solution, which is an aqueous solution obtained by adding an acid to sodium chlorite and adjusting the pH to 2.3 to 2.9, has recently drawn significant attention as a disinfectant in the food industry. While there are several studies that have elucidated the sterilizing effect and sterilizing effect of chlorous acid which is the primary active ingredient of such an aqueous ASC solution, there is no evidence showing which active molecule yields such a sterilizing effect and sanitizing effect. Thus, the objective of the study was to use ESR spectroscopy while targeting aqueous solutions obtained by adding an acid to sodium chlorite having only a maximum absorbance section at a wavelength of 354 m to identify the primary active species of chlorous acid and quantify the species by using DPD method.

### (Materials and Methods)

### (Chemical substance)

Sodium thiosulfate, anhydrous sodium sulfate, sodium chlorite (purity: 80%), sodium hypochlorite, hydrochloric acid, sulfuric acid, potassium iodide, and N,N-diethyl-p-phenylenediamine (DPD) were purchased from FUJIFILM Wako Pure Chemical Corporation. Starch was purchased from Kanto Chemical Co., Inc. 4-hydroxy-2,2,6,6-tetramethylpiperidine-1-oxyl (TEMPOL) was purchased from Sigma-Aldrich.

### (Preparation of an aqueous solution obtained by adding an acid to sodium chlorite)

An aqueous solution obtained by adding an acid to sodium chlorite was prepared by mixing 0.1 M sodium chlorite with 2.5 M hydrochloric acid to achieve a desired concentration by using ion exchange water. The concentration of sodium chlorite was measured by standard iodometry.

### (Measurement of free chlorine concentration)

The free chlorine concentration was measured by a previously reported DPD method (Goda H, Yamaoka H, Nakayama-Imaohji H, Kawata H, Horiuchi I, Fujita Y, et al. Microbicidal effects of weakly acidified chlorous acid water against feline calicivirus and Clostridium difficile spores under protein-rich conditions. PLoS One. 2017; 12: e0176718).

### (Back titration using thiosulfate of radical active species contained in an aqueous solution obtained by adding an acid to sodium chlorite)

It is possible to determine whether a component exhibiting a wavelength of 354 nm is an active radical species through thiosulfate titration. An aqueous solution obtained by adding an acid to sodium chlorite was prepared by mixing an aqueous 0.1 M sodium chlorite solution with 0.62 M hydrochloric acid at a ratio of 1:1 for 20 minutes. Absorption at 354 nm was measured 10 minutes after adding sodium thiosulfate. A decrease in mean absorption at 354 nm was plotted against the final concentration of sodium thiosulfate to elucidate the relationship between active radical species and absorbance at 354 nm.

### (Spectrophotometry of an aqueous solution obtained by adding an acid to sodium chlorite)

UV-vis absorption spectra were recorded with a U-5100 ratio beam spectrophotometer (HITACHI). When the absorbance exceeded 1.5, the sample was diluted suitably with ion exchange water. Such absorbance of samples was calculated by multiplying the absorbance at 354 nm by a dilution factor.

### (ESR analysis of an aqueous solution obtained by adding an acid to sodium chlorite)

An aqueous solution obtained by adding an acid to sodium chlorite was placed in a glass capillary tube with a length of 100 mm and inner diameter of 2 mm. The glass capillary was transferred to a capillary cell attached to an ESR cavity, and ESR measurement was taken by using an X band spectrometer (JEOL FA-100ESR) operated at 9.43 GHz at room temperature. The magnetic field was modulated at 100 kHz. The conditions for measuring ESR spectra were: resonant frequency = 9.4599 GHz; microwave output = 4 mW, observed magnetic field = 336.0 ± 10 mT, magnetic field modulation width of 0.1 mT, sweep time of 2 minutes, and time constant of 0.1 s. The signal intensity was normalized with respect to an MnO marker, and the concentration of stable radical products was determined based on signal height by using an external standard TEMPOL. Radical species found in an aqueous solution obtained by adding an acid to sodium chlorite was quantified by using an integrated software for determining a spectral region mounted onto an ESR device.

### Theoretical analysis

A model of a chlorine peroxide radical (Cl-O-O·) was created by drawing the molecular structure with GaussView 6.0, and the compound was optimized through density functional theory (DFT). The long-range corrected density functional ωB97X-B was studied using the basis set 6-311G(d,p) with Gaussian 16 (Frisch MJ, Trucks GW, Schlegel HB, Scuseria GE, Robb MA, Cheeseman JR, et al. Gaussian 16, Revision A.03. Wallingford CT: Gaussian, Inc.; 2016.). The solvation effect of the model was calculated by using a conductor-like polarizable continuum model (CPCM). Water was used as the solvent. The optimized molecular structure was studied by vibration analysis. It was confirmed that there was no imaginary number frequency in the balanced structure, and the total energy was corrected with zero-point motion energy.

### (Results and discussion)

### (ESR analysis on radicals discovered in an aqueous solution obtained by adding an acid to sodium chlorite)

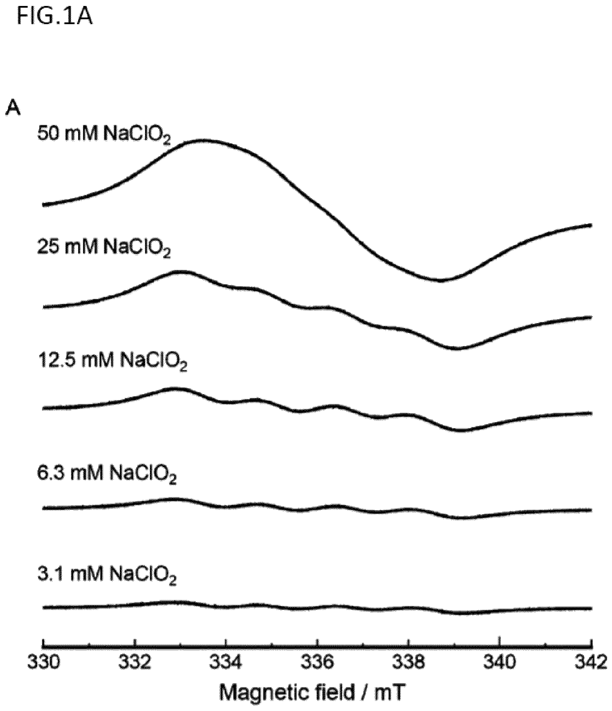

Free radicals in an aqueous solution obtained by adding an acid to sodium chlorite were measured by using ESR measurement. Aqueous sodium chlorite solutions with varying concentrations from 0.1 M to 0.0063 M were mixed with an aqueous 2.5 M HCl solution at a ratio of 1:1. The solution was measured 4 minutes later by ESR spectroscopy. Figure 1A shows ESR spectra of the samples at room temperature. Surprisingly, the solution exhibited stable ESR signals under ambient conditions. The ESR signals were observed at least at two weeks after preparation of the solution obtained by adding an acid to sodium chlorite. The longevity of the ESR signals was very long, and the intensity of the ESR signals increased as the concentration of sodium chlorite increased. Free radicals accounted for up to 30% of the chlorite concentration. Spread in ESR signals seen in high concentrations of NaClO₂ and HCl is likely due to spin-spin interaction of radicals.

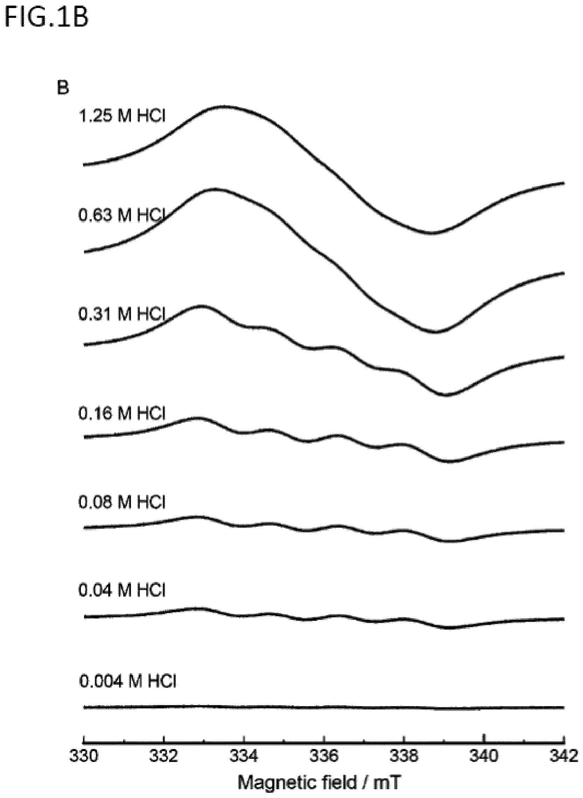

Figure **1A** shows ESR spectra of radical species in an aqueous solution obtained by adding an acid to sodium chlorite. (Figure **1A**) shows ESR spectra of radical species seen in an aqueous solution after mixing an aqueous HCl solution to achieve a final HCl concentration of 1.25 M in 240 seconds. The figure shows the concentration of sodium chlorite. (Figure **1B**) shows dependency of the ESR spectra of the aqueous solution obtained by adding an acid to sodium chlorite on the HCl concentration. The final HCl concentrations are shown in the figure. The ESR spectra were recorded 240 seconds after mixing an aqueous 0.1 M sodium chlorite solution with an aqueous HCl solution.

The ESR spectra were divided into four lines of the intensity ratio 1:1:1:1. ESR parameter values were g = 2.0114 and α = 1.85 mT, which match the data reported by Ozawa et al. (Ozawa T, Kwan T. Electron spin resonance studies of chlorine dioxide (ClO2) in aqueous solutions. Chem Pharm Bull. 1983; 31: 2864-2867; Ozawa T, Miura Y, Ueda J-I. Oxidation of spin-traps by chlorine dioxide (ClO2) radical in aqueous solutions: first ESR evidence of formation of new nitroxide radicals. Free Radic Biol Med. 1996; 20: 837-841) (g = 2.0106, α = 1.85 mT). I = 1/2 and S = 3/2 were calculated from E = hν = gµBH₀ + αIS. Thus, S = 3/2 indicates chlorine isotopes 35Cl and 37Cl. Furthermore, g = 2.0114 is a value calculated from g = hν/µBH₀ at magnetic field (H₀) = 336 mT. Magnetic field (H₀) = 336 mT is the center of four lines. Two intensity ratios spreading to both sides of magnetic field (H₀) = 336 mT (total of four ratios) were observed (Figures **1A** and **1B**). Thus, the signal pattern indicates two consecutive oxygen atoms to a chlorine atom nucleus (Cl→O-O).

To further study signals, data was compared to ESR parameters of radical modules that were previously reported. Hashimoto et al. (Hashimoto M, Nakai Y, Kohno M, Tajima K, Kanaori K, Endo N, et al. DMPO spin trapping of superoxide anion in strong alkaline DMSO solution. Chem Lett. 1997; 26: 71-72) performed spin trapping of superoxide anion (O₂^{·-}) in a strongly alkaline DMSO solution comprising 5,5-dimethyl-1-pyrroline-N-oxide (DMPO) in a low temperature and solid state (77K). The resulting ESR spectra are comprised of only lines with broad widths of 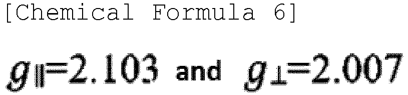 and exhibit the formation of "O₂^{·-}". The g₀ value obtained with an isotropic superoxide solution was 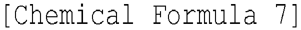 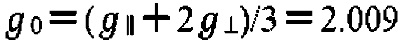 The g value of O₂^{·-}adduct matched the value for radicals seen in the aqueous solution obtained by adding an acid to sodium chlorite in Figure **1A****.** The ESR parameters reported by Adrian et al. were g_{z} = 2.0100, gₓ = 1.9987, and g_{y} = 1.9915 upon formation of "Cl-O-O" (Adrian FJ, Cochran EL, Bowers VA. Electron spin resonance spectra of ClCO and ClOO* J Chem Phys. 1972; 56: 6251-6255). The "Cl-O-O" structure was generated by the same photolysis of samples consisting of 1% Cl₂, 0.1% O₂, and 98.8% Ar gas at 4K. The observed free radicals were measured at very low temperatures, suggesting that they are nuclear chlorine atoms. Thus, the g₀ value of chlorine radical (Cl·) (or chlorine dioxide radical (O-Cl·-O) with a high electron density on the chlorine atom nucleus) gas was g₀ = (g_{z} + gₓ + g_{y}) /3 = 2.000. The g₀ value is completely different from the g value reported herein. These results indicate the possibility of the "Cl-O-O" formation in Figure **1A** having the same molecular structure as superoxide.

For Eachus et al., the reported ESR parameters were gₓ = 1.9983 and αₓ = 0.53 mT, g_{y} = 2.0017 and α_{y} = 0.72 mT, and g_{y} = 2.0130 and α_{z} = 1.49 mT (Eachus RS, Edwards PR, Subramanian S, Symons MCR.A peroxy-radical of chlorine, Cl-O-O. Chem Commun (London). 1967; 20: 1036-1037.) The value of g₀ was g₀ = (g_{z} + gₓ + g_{y})/3 = 2.0043 and α₀ = (α_{z} + αₓ + α_{y})/3 = 0.913 mT. The "chlorine perchlorate" was generated from KClO₄ by irradiation of gamma rays at 195K. However, the reported value of g₀ = 2.009 was the same as the value for superoxide anion (O₂^{·-}). As a result, the value reported by Eachus et al. was the same as that for oxygen radical (O-). Meanwhile, g₀ = 2.0043 is not g = 2.0114, but a value close to the value for chlorine radical (Cl·), i.e., g₀ = 2.000. Furthermore, α₀ = 0.913 mT does not correspond to α = 1.85 mT. The sample structure of Eachus et al. is possibly that of chlorine dioxide radical (O = Cl-O-) for which the radical is present on an oxygen atom.

In view of the above, the quadrupole splitting seen in Figure **1A** should be assigned to ESR signals of "Cl-OO·" with an oxygen radical instead of a chlorine dioxide radical (O = Cl ·-O) with a high electron density in the nucleus of a chlorine atom. Thus, this radical active species should be referred to as "Cl-O-O·" or a chlorine peroxide radical.

Figure **1B** shows the ESR spectra after mixing an aqueous 0.1 M sodium chlorite solution with an aqueous HCl solution in the range of 2.5 M to 0.008 M at a ratio of 1:1. ESR signals intensified with an increase in the HCl concentration. This result indicates that a chloroperoxy radical was formed only under acidic conditions.

### (Relationship between chlorine peroxide radical intensity and absorbance)

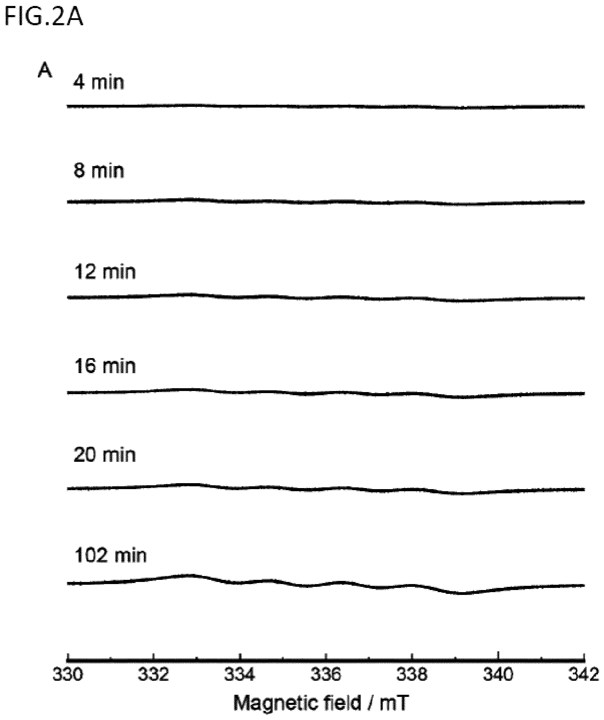

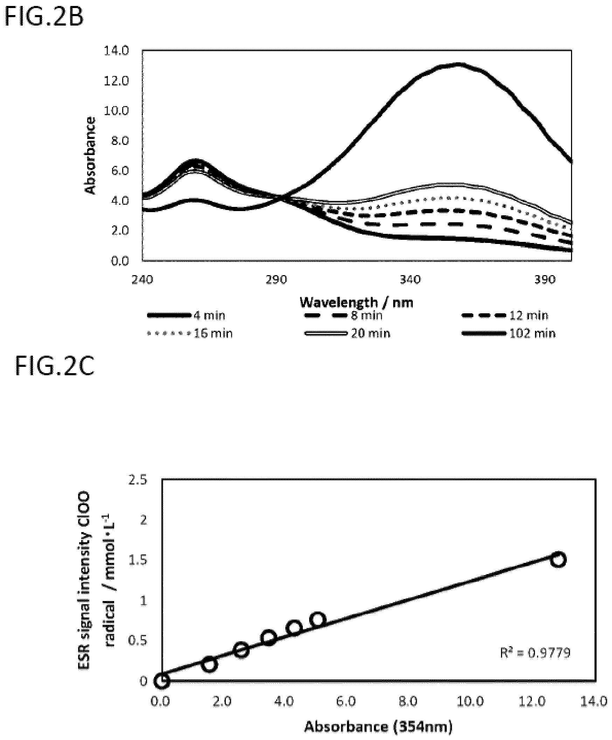

As described above, a chlorine peroxide radical is formed when an aqueous sodium chlorite solution is acidified. Figure **2A** shows the time dependent change of chlorine peroxide radical signals after addition of HCl. The ESR signal intensity of chlorine peroxide radicals gradually increased with a relatively low concentration of HCl, and the ESR signals remained stable for one week or longer when stored in a dark location. Figure **2B** shows the UV-Vis absorption spectra of an aqueous solution obtained by adding an acid to sodium chlorite. The absorption spectra were measured under the same conditions as Figure **2A****.** The absorption band of 354 nm also increased with longer time after mixture. Figure **2C** shows the relationship between absorbance at 354 nm and ESR signal intensity obtained from Figures **2A** and **2B****.** There is a clear linear relationship between chlorine peroxide radical signal intensity and absorbance at 354 nm. This result indicates that the absorption band at 354 nm generally reported in an aqueous solution obtained by adding an acid to sodium chlorite originates from a chlorine peroxide radical.

Figures **2A** to **2C** show UV-Vis absorption spectra and ESR signal intensity of an aqueous solution obtained by adding an acid to sodium chlorite. (Figure **2A**) shows time dependent change of ESR spectra after mixing a 0.1 M sodium chlorite solution with 0.08 M hydrochloric acid at a ratio of 1:1. (Figure **2B**) shows the absorption spectra of an aqueous solution obtained by adding an acid to sodium chlorite under the same conditions as Figure **2A****.** (Figure **2C**) shows the relationship between absorbance at 354 nm and ESR signal intensity of chlorine peroxide radicals obtained from Figures **2A** and **2B****.**

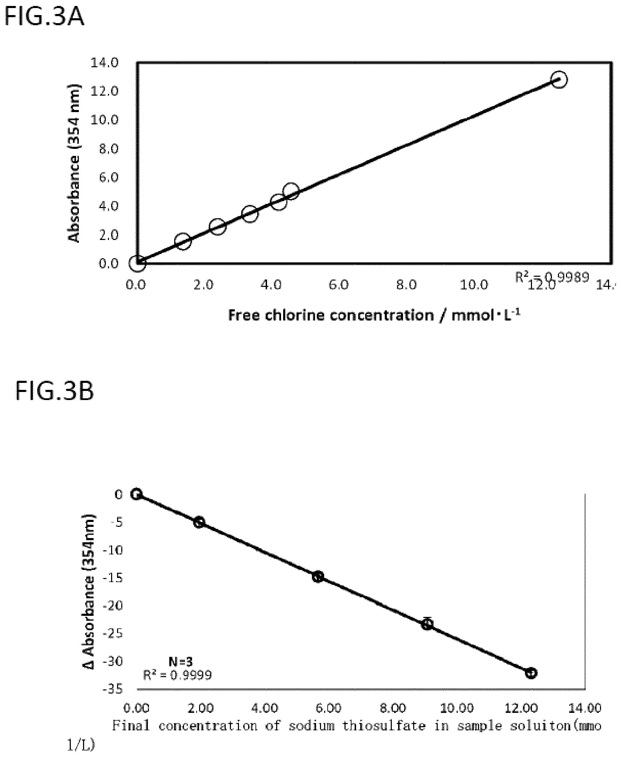

Figure **3A** shows the relationship between the free chlorine concentration and absorbance at 354 nm of an aqueous solution after mixing an aqueous sodium chlorite solution with HCl. As shown in Figure **2B**, the absorbance at 354 nm increased in a time dependent manner. The free chlorine (free, non-bound, total chlorine) concentration was measured by the DPD method at the same time as UV absorption spectra. The free chlorine concentration also increased in a time dependent manner and exhibited an excellent linear relationship with absorbance at 354 nm, which indicates that there is a strong correlation therebetween. Figure **3B** shows a quenching experiment of free chlorine by adding thiosulfate. The absorbance at 354 nm linearly decreases with an increase in the concentration of thiosulfate in an aqueous solution obtained by adding an acid to sodium chlorite. This indicates that absorbance at 354 nm is closely associated with active chlorine species. These data indicate that absorbance at 354 nm originates from active chlorine which has reacted with thiosulfate. The active chlorine species was detected by DPD. In Figure **2B**, a chlorine peroxide radical exhibited maximum absorbance at 354 nm, which is closely correlated with active chlorine species reacting with thiosulfate. This discovery shows the possibility that a chlorine peroxide radical is an active species of an aqueous solution obtained by adding an acid to sodium chlorite. Absorbance at 354 nm also had longevity. An absorption band at about 354 nm was measured three months after preparation of an aqueous solution obtained by adding an acid to sodium chlorite.

Figure **3A** shows the relationship between consumption of active chlorine and the active chlorine concentration in an aqueous solution obtained by adding an acid to sodium chlorite and absorbance at 354 nm. Figure **3A** shows the relationship between absorbance at 354 nm and the free chlorine concentration obtained by the DPD method under the same reaction condition as Figure **2A****.** Figure **3B** shows a phenomenon where absorbance at a wavelength of 354 nm exhibited by an aqueous solution obtained by adding an acid to sodium chlorite upon addition of thiosulfate gradually decreases. Data represents mean ± SD (n = 3).

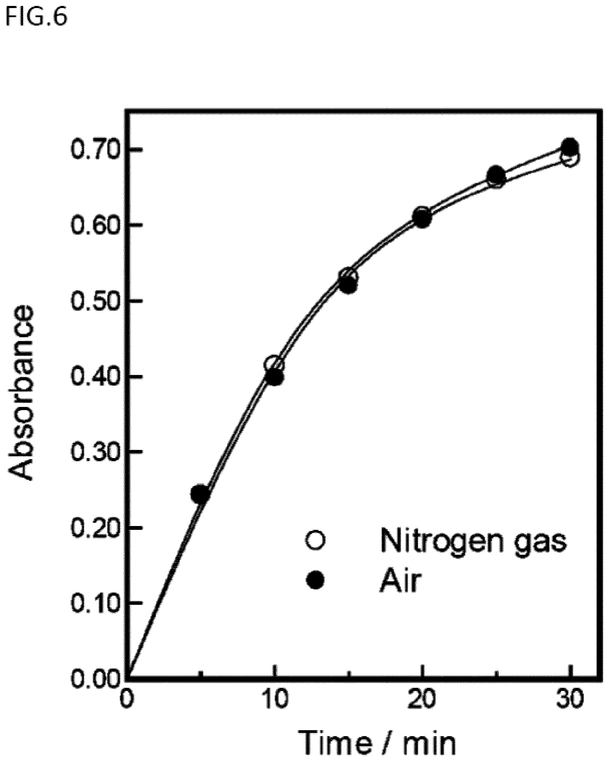

The formation of the absorption band at about 354 nm originating from a chlorine peroxide radical does not change in the presence or absence of a dioxide molecule in a solution (Figure **6**), suggesting that molecular oxygen is not involved in the formation of a chlorine peroxide radical.

It is well known that chlorite does not have an antimicrobial action. The total chlorine concentration includes both inactive species such as chlorite and active free radicals such as chlorine peroxide radicals. Thus, when the concentration of an aqueous ASC solution obtained by adding an acid to sodium chlorite and adjusting the pH to 2.3 to 2.9 is determined by standard iodometric titration, the concentration of active species in the aqueous ASC solution is overestimated, despite being insufficient to induce a sanitizing effect. As described above, absorbance at 354 nm and DPD method exhibits a linear relationship with a radical which is the primary active species of chlorous acid, i.e., the primary active ingredient of an aqueous ASC solution, through ESR analysis. This indicates that a chlorine peroxide in an aqueous ASC solution obtained by adding an acid to sodium chlorite and adjusting the pH to 2.3 to 2.9, as an active free radical, can be quantified by using measurement of absorbance at 354 nm or DPD.

### (Theoretical analysis of chlorine peroxide radical)

An aqueous phase chlorine peroxide radical (Cl-O-O·) molecule model is created by constructing a molecular structure with GaussView 6.0 and optimized by using DFT. The stability of a chlorine peroxide radical was quantified in an aqueous solution via a conductor-like polarizable continuum model (CPCM) using water as the solvent.

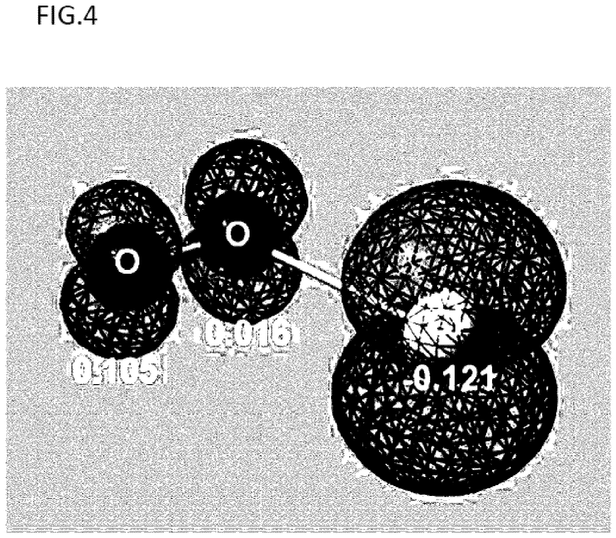

Figure **4** shows an optimized structure and singly occupied molecular orbital (SOMO) for a chlorine peroxide radical. While the bond length of Cl-O was 0.245 nm, the bond length of O-O was 0.119 nm. An O-O bond is shorter than a bond of molecular oxygen (O₂, 0.121 nm), and is longer or similar to a bond of a dioxygenyl salt (O₂⁺; 0.091 to 0.121 nm at room temperature) (Mazej Z, Goreshnik E. Synthesis of dioxygenyl salts by photochemical reactions in liquid anhydrous hydrogen fluoride: X-ray crystal structures of α- and β-O2Sn2F9, O2Sn2F9·0.9HF, O2GeF5·HF, and O2[Hg(HF)]4(SbF6)9. Inorg Chem. 2020; 59: 2092-2103). According to the Mulliken charge distribution shown in Figure **4**, negative charges were localized at Cl atoms. Such structural properties suggest that a Cl atom of a chlorine peroxide radical is anionic, whereas an oxygen atom is cationic such as a dioxygenyl cation.

Figure **4** shows an optimized structure, charge distribution, and SOMO for a chlorine peroxide radical. Cl atoms and oxygen atoms are each represented as a sphere. Values indicate the Mulliken charge distribution of each atom, and the meshed surfaces indicate the spin density of SOMO.

Table 1 shows the total energy of optimized structures of [ClO₂]* candidates, i.e., chlorine peroxide radical (Cl-O-O·) and chlorine dioxide radical (O=Cl·-O). The total energy of a chlorine peroxide radical (Cl-O-O·) was lower by 274 kJ/mol than that of a chlorine dioxide radical (O=Cl·-O). The large difference indicates that a chlorine peroxide radical (Cl-O-O·) is more stable than a chlorine dioxide radical (O=Cl·-O) in an aqueous phase. Theoretical results match the experimental observation, under which a chlorine peroxide radical (Cl-O-O-) exhibited a much longer longevity than a chlorine dioxide radical (O=Cl·-O). Thus, these results support the theory of active radical species observed under ESR measurement being a chlorine peroxide radical (Cl-O-O·).

**[Table 1]**

| Table 1. Total energy of Cl-O-O· and O=Cl·-O calculated through DFT. | | |
|---|---|---|
| Radical species | Total energy (a.u) | Relative energy (kJ/mol) |
| O=Cl^{•}-O | -610.365367 | 0 |
| Cl-O-O^{•} | -610.469703 | -274 |

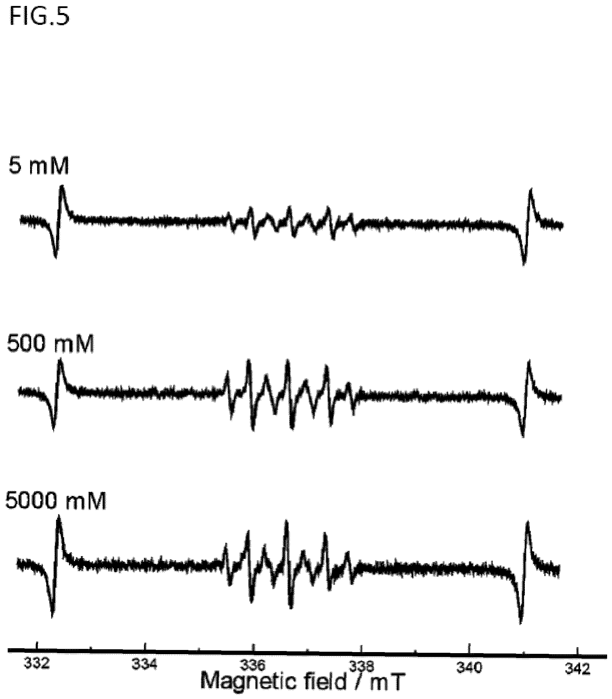

### (Figure 5: ESR spin-trapping measurements of an aqueous solution obtained by adding an acid to sodium chlorite by using 1.5 M DMPO in HCl of various concentrations)

The NaClO₂ concentration was 50 mM. The final concentration of HCl is shown in the figure.

Figure **5** shows ESR signals from spin trapping using DMPO of an aqueous solution obtained by adding an acid to sodium chlorite. The intensities of these signals were estimated by comparison of a manganese oxide marker signal and standard TEMPOL solution observed on both sides of a DMPO spin trapping signal.

While the DMPO-X ESR signal intensities increased due to acidification of NaClO₂ by addition of an HCl solution, a DMPO-OH signal originating from spin trapping of a hydroxyl radical using DMPO was not detected. Observed DMPO-X signals were within the range of 5 to 8 µM.

### (Figure 6: Change in absorbance after adding an HCl solution to an NaClO₂ solution)

100 mM NaClO₂ and 12M HCl were then added to Milli-Q grade water to obtain 1 mM NaClO₂ and 400 mM HCl. Absorbance was measured with Shimadzu Multispec 1500 UV-Vis spectrophotometer. The aqueous solution, which was the test specimen, was continuously stirred during the measurement. For a nitrogen gas atmosphere, Milli-Q grade water was deaerated by buddling for 30 minutes with nitrogen gas prior to the experiment. After adding NaClO₂ and HCl to aerated or deaerated Milli-Q water in a screw top cuvette, the cuvette was closed with a screw cap and subjected to measurement.

Formation of chlorine peroxide radicals measured through absorbance at 354 nm did not change in the presence or absence of oxygen. The observation result indicates that a chlorine peroxide radical was not formed by a reaction between a NaClO₂ derived radical and dissolved molecular oxygen in the solution. The mechanism of chlorine peroxide radical formation is unknown.

### (Conclusion)

Free radicals in an aqueous solution obtained by adding an acid to sodium chlorite were measured by ESR spectroscopy, and chlorine peroxide radicals (Cl-O-O·) were assigned as the present radical instead of chlorine dioxide radicals (O=Cl·-O). Total energy calculation through DFT indicated that a chlorine peroxide radical is more stable than a chlorine dioxide radical. An active chlorine peroxide radical in an aqueous solution obtained by adding an acid to sodium chlorite can be quantified by using the DPD method or measurement of absorbance at 354 nm. Thus, oxidation power of chlorous acid obtained by adding an acid to sodium chlorite may be dependent on highly stable chlorine peroxide radicals.

Since a chlorine peroxide radical polymerizes in a high concentration of sodium chlorite solution, oxidative activity decreases. It is necessary to adjust (optimize) the concentration of sodium chlorite and hydrochloric acid concentration (pH) to highly efficiently make a solution with sterilizing power.

Active molecular species involved in sterilization of microorganisms were radical species, i.e., chlorine peroxide radical (Cl-O-O·), rather than the primary active ingredient chlorous acid (HClO₂). The amount of chlorine peroxide radical (Cl-O-O·) produced can be found by ESR measurement or spectroscopic measurement. Thus, the ability to control the amount of GRAS also enables controlling the sterilizing power. The amount of active molecular species chlorine peroxide radical (Cl-O-O·) can be controlled and stabilized to commercialize a product as a new sterilizing agent.

Active molecular species of chlorous acid (HClO₂) generated under acidic conditions from adding a GRAS acid to chlorite (NaClO₂) were not generally so-called chlorine dioxide (ClO₂) molecules, but peroxide radicals (R-O-O·). Moreover, a signal of a radical (O=Cl·=O) attaching to a chlorine atom was not found in the peroxide radicals. In view of the above, active molecular species of chlorous acid (HClO₂) involved in an antimicrobial action, so-called sterilizing power or disinfecting effect, are chlorine peroxide radical (Cl-O-O·), and this was revealed by observation through ESR. Thus, it is understood that such a chlorine peroxide radical (Cl-O-O·) should not be referred to as a chlorine dioxide radical, but correctly as a chlorine peroxide radical.

It was found that when the hydrogen ion concentration is oversupplied (proton is supplied) upon adding a GRAS acid (hydrochloric acid) to chlorite (NaClO₂), chlorite ions (ClO₂⁻) with a maximum absorbance section at 260 nm produce a chlorine peroxide radical (Cl-O-O·) with a maximum absorbance section from 350 nm to 360 nm first via chlorous acid (HClO₂) with a maximum absorbance section at 280 nm.

It was also found that such a chlorine peroxide radical (Cl-O-O·) has a positive relationship with a value (free chlorine concentration) obtained by the DPD method, which is a colorimetric method, and thus can be readily measured by this method. It is known that there is also a strong relationship between a value (free chlorine concentration) obtained by DPD method, which is a colorimetric method, and phenol coefficient that has a strong causal relationship with antimicrobial action, the so-called sterilizing power or disinfecting effect.

It was found in view of the above results that such a chlorine peroxide radical (Cl-O-O·) can be readily measured with a value (free chlorine concentration) obtained by the DPD method, which is a colorimetric method, so that management together with the content (total chlorine) obtained by using potassium iodide redox titration can result in ensuring safely benefiting from an antimicrobial action, the so-called sterilizing power or disinfecting effect, and antiviral inactivation action.

### (Example 2: Sterilization of microorganisms)

### Bacterial strains and growth medium

A total of 30 Campylobacter stains including 15 C. jejuri stains (6 clinical, 5 bovine, and 4 chicken) and 15 C. Coli strains (8 clinical and 7 swine) are used in this study. Each strain is isolated from different hosts and individuals, and the species are identified by cdt gene-based speciesspecific multiplex PCR (Asaura et al., 2008, FEMS Immunology and Medical Microbiology, 52, 260-266). Campylobacters are grown in blood agar (blood agar base No. 2 (Oxoid Ltd., Basingstoke, United Kingdom)) supplemented with 5% (v/v) defibrinated horse blood (Nippon Bio Supp. Center, Tokyo, Japan) at 37°C for 48 hours or longer under anaerobic conditions (10% CO₂, 10% H2, 80% N₂).

### Sterilization activity of chlorine peroxide radical in Bolton broth

C. jejuri strains 81-176, ATCC 33560, and Chi2, and C. Coli strains ATCC33559 and Cc4 are cultured in the blood agar described above. A bacteria colony is suspended in PBS(-) at pH 7.4, and the bacterial concentration is adjusted to about 10⁴ CFU/mL. 100 µL of the bacterial suspension is then seeded in 5 mL of Bolton broth (Oxoid Ltd.) and cultured at 37°C for 48 hours under anaerobic conditions as described above. 200 50 µL bacteria cultures are transferred to a 1.5 mL tube and mixed with an equal volume of PBS(-) at a pH of 7.4, or with 400 ppm, 2,000 ppm, or 4,000 ppm of chlorine peroxide radical. The mixture is then maintained for 3 minutes at room temperature. 250 µL of 50 mM sodium thiosulfate (Nacalai Tesque, Inc. Kyoto, Japan) is then added to inactivate the compounds. The remaining viable bacteria are investigated by using a blood agar plate and counting colonies.

In the same manner, all Campylobacter strains are treated with PBS(-) at pH of 7.4 or 400 ppm of chlorine peroxide radical. 100 µL of each of the treated bacterial cultures is then seeded in 5 mL of Bolton broth and the cells are allowed to grow at 37°C for 48 hours under anaerobic conditions. A loopful of culture is then arranged in a stripe pattern on a blood agar plate, and the plate is incubated as previously described.

As described above, the present disclosure is exemplified by the use of its preferred embodiments. It is understood that the scope of the present invention should be interpreted solely based on the claims. The present application claims priority to Japanese Patent Application No. 2021-81185 (filed on May 12, 2021). The entire content thereof is incorporated herein by reference. It is understood that any patent, any patent application, and any references cited herein should be incorporated herein by reference in the same manner as the contents are specifically described herein.

### [Industrial Applicability]

An antimicrobial agent, sterilizing agent, sanitizing agent, disinfecting agent, antiviral agent, and agent useful as a food additive: sterilizer can be provided.

## Claims

1. A chlorine peroxide radical.

2. A method of manufacturing a chlorine peroxide radical, comprising a step of contacting an excessive amount of hydrogen ions with a chlorine oxide having a portion comprising two or more oxygen atoms to one chlorine atom.

3. The method of claim 2, wherein the excessive amount is an amount of hydrogen ions greater than 0.07 milliequivalent per 1 g of mass in terms of sodium chlorite of the chlorine oxide.

4. The method of claim 2 or 3, wherein the excessive amount is an amount of hydrogen ions of 0.15 milliequivalent or greater per 1 g of mass in terms of sodium chlorite of the chlorine oxide.

5. The method of any one of claims 2 to 4, wherein the chlorine oxide is chlorine dioxide, chlorine dioxide gas, aqueous chlorine dioxide, stabilized chlorine dioxide, chlorous acid, chlorite, chlorite ion, chloric acid, chlorate, chlorate ion, perchloric acid, perchlorate, and/or perchlorate ion.

6. The method of any one of claims 2 to 5, wherein the chlorine oxide is an aqueous solution.

7. The method of any one of claims 2 to 6, wherein the step of contacting hydrogen ions comprises adding an acid.

8. The method of claim 7, wherein the acid is a GRAS acid.

9. The method of any one of claims 2 to 8, wherein the step of contacting hydrogen ions comprises using H+ ion exchange resin.

10. The method of any one of claims 2 to 9, wherein the chlorine peroxide radical is present in an aqueous solution.

11. A composition comprising a chlorine peroxide radical.

12. The composition of claim 11, wherein the composition is an aqueous solution.

13. The composition of claim 11 or 12, wherein the chlorine peroxide radical is present as an active ingredient of a sterilizing agent.

14. A method of killing a virus, a bacterium, and/or a fungus, comprising a step of contacting a chlorine peroxide radical with a virus, a bacterium, and/or a fungus.

15. Use of a chlorine peroxide radical in the manufacture of a sterilizing agent for killing a virus, a bacterium, and/or a fungus.

16. A method of confirming and/or quantifying the presence of a chlorine peroxide radical in a liquid, comprising a step of detecting a chlorine peroxide radical and/or measuring an amount of a chlorine peroxide radical by ESR.

17. A method of measuring a sterilizing power of an agent for killing a virus, a bacterium, and/or a fungus, comprising a step of measuring a concentration of a chlorine peroxide radical in the agent.

18. Use of a chlorine peroxide radical for killing a virus, a bacterium, and/or a fungus.
